# EUROPÄISCHE PATENTSCHRIFT

(11) **EP 0 791 946 B1**
(45) Veröffentlichungstag und Bekanntmachung des Hinweises auf die Patenterteilung: **06.05.1999**
(21) Anmeldenummer: 97102869.1
(22) Anmeldetag: 21.02.1997
(51) Int. Cl.: H01H 85/36

(54) **Hochspannungs-Hochleistungs-Sicherung**
High-voltage high-power fuse
Fusible de haute tension haute puissante

(30) Priorität: 29.02.1996 DE 19607756; 27.01.1997 DE 19702780
(43) Veröffentlichungstag der Anmeldung: 27.08.1997
(73) Patentinhaber: Fritz Driescher KG, Spezialfabrik für Elektrizitätswerksbedarf GmbH & Co., D-41844 Wegberg (DE)
(72) Erfinder: Hollmann, Fritz, 41844 Wegberg (DE); Grote, Martin, 41812 Erkelenz (DE); Kluth, Ilona, 41515 Grevenbroich (DE)
(74) Vertreter: Bergen, Klaus, Dipl.-Ing.

(56) Entgegenhaltungen:
- US-A- 3 839 786
- US-A- 4 189 694

## Beschreibung

Die Erfindung betrifft eine Sicherung, insbesondere eine Hochleistungs-Sicherung mit mindestens einem Schmelzeinsatz. Derartige Sicherungen werden vorzugsweise im Mittelspannungsbereich eingesetzt, obwohl sie in der Umgangssprache Hochspannungs-Sicherungen bzw. Hochspannungs-Hochleistungs-Sicherungen genannt werden.

Eine Sicherung ist ein Gerät, das durch Abschmelzen eines oder mehrerer seiner hierfür bestimmten und ausgelegten Teile den Stromkreis, in dem es eingefügt ist, öffnet, indem es den Strom ausschaltet, wenn dieser über eine ausreichend lange Zeit einen gegebenen Wert überschreitet. Dabei ist der Schmelzleiter oder Schmelzeinsatz dazu bestimmt, unter Einwirkung eines Stroms, welcher einen bestimmten Wert über eine bestimmte Zeit übersteigt, abzuschmelzen.

Hochspannungs-Hochleistungs-Sicherungen, kurz HH-Sicherungen genannt, bestehen in aller Regel aus einem keramischen Rohrkörper mit leitenden Kappen an beiden Enden, zwischen denen im Inneren des Rohres auf einem keramischen Isolierkörper Schmelzleiter angebracht sind, die elektrisch mit den Kappen verbunden sind. Der gesamte Schmelzleiteraufbau ist in einem Quarzsandpolster eingebettet, das der Kühlung des Schaltlichtbogens dient, wodurch das Hochleistungsverhalten der Sicherungen erreicht wird.

Es handelt sich hierbei also um strombegrenzend und selektiv wirkende HH-Sicherungseinsätze, die durch Schmelzen eines Materials selbsttätig auslösen, und zwar zum Schutz von Betriebsmitteln vorzugsweise in Mittelspannungsnetzen der Energie-Versorgungsunternehmen und der Industrie.

Durch die Firmenbroschüre "Hochspannungs-Hochleistungs-Sicherungseinsätze für Innenraum- und Freiluft-Schaltanlagen" der Anmelderin sind HH-Sicherungen nach dem zuvor beschriebenen Prinzip bekanntgeworden, bei denen parallel zueinander angeordnete Schmelzleiter in genutete Stege eines sternförmigen Schmelzleiterträgers eingelegt und dadurch in ihrer Lage genau fixiert sind. Dieser konstruktive Aufbau führt zu hohen Ausschaltleistungen, da durch die Art der Schmelzleiteranordnung und die ausgeprägten, genuteten Stege des sternförmigen Schmelzleiterträgers ein System von in Reihe geschalteten Kammern gebildet wird und bei der Unterbrechung von Kurzschlüssen sich in jeder dieser Kammern, exakt gesteuert durch Engstellen des Schmelzleiters, ein Teillichtbogen bildet, so daß beim Verdampfen der Schmelz-leiter eine Vielfachunterbrechung stattfindet.

Diese bekannte Einrichtung weist allerdings den Nachteil auf, daß sie aus physikalischen Gründen Ströme unterhalb des Mindestausschaltstroms nicht unterbrechen kann. Dies ist auf die langen Schmelzzeiten bei kleinen Überströmen und die damit einhergehende übermäßige Erwärmung zurückzuführen.

Es wird daher (siehe auch DIN VDE 0670 Teil 4) zwischen Teilbereich- und Vollbereichsicherungen unterschieden. Letztere sind in der Lage, jeden Strom bis hin zum Nennausschaltstrom zu unterbrechen. Sicherungen dieser Art sind z.B. aus der DE 24 12 688 B2 sowie der DE 32 37 326 Al bekannt, mit denen vorgeschlagen wird, zwei elektrisch in Reihe geschaltete Systeme in einem Sicherungseinsatz unterzubringen, wobei ein System der strombegrenzenden Teilbereichsicherung entspricht, während dem Abschalten der Überströme ein zweites System dient, das aus in temperaturfesten Silikonschläuchen untergebrachten Zinn-Schmelzleitern besteht. Im Überlastfall schmilzt das Zinn und strömt unter Druck aus den Schläuchen in den Quarzsand, so daß eine Trennstrecke entsteht.

Um bei Teilbereichsicherungen einen vollständigen Überlastschutz zu erreichen, werden sehr häufig diese Sicherungen in Kombination mit einer Schlagstift-Einrichtung bestückt. Hierbei gibt ein innerhalb der Sicherung angeordneter Haltedraht den Schlagstift bei Überströmen frei und bewirkt eine dreipolige Abschaltung über den nachgeordneten Lasttrennschalter. Diese Konstruktion wird aber von vielen Anwendern als technisch und wirtschaftlich ungünstige Lösung angesehen, da die Netzversorgung bei der dreipoligen Abschaltung durch den zusätzlich erforderlichen Lasttrennschalter nicht weiter aufrechterhalten wird und die Konstruktion der Auslösemechanik relativ aufwendig ist.

Vorzugsweise werden Vollbereichsicherungen eingesetzt, die die zuvor genannten Nachteile eliminieren, indem die Abschaltung der Überlast- und Kurzschlußströme direkt von dem Sicherungseinsatz übernommen wird. Die zuvor beschriebene bekannte Bauweise besteht aus der Reihenschaltung zwei sich vom Prinzip unterscheidender Schaltsysteme, die Kennlinie ergibt sich daher aus der Überlagerung der Kennlinien der beiden Schaltsysteme.

Es hat sich nun gezeigt, daß Abschaltungen im Schnittpunkt der beiden Kennlinien, d.h. im Übergangsbereich zwischen Kurzschluß und Überlastbereich, nicht immer sicher beherrscht werden können. Schaltversagen können im Bereich des Schnittpunktes der beiden Kennlinien entstehen, wenn der Strom für das Löschsystem zu groß, für die Silberschmelzleiter jedoch noch zu niedrig ist. Da die Baulängen der HH-Sicherungen in der DIN-Vorschrift vorgegeben sind, werden die beiden Schaltsysteme in den Vollbereichsicherungen so aufgeteilt, daß etwa ein Drittel für den Überlastbereich und zwei Drittel für den Kurzschlußbereich vorgesehen werden.

Wegen des geringeren zur Verfügung stehenden Raumes ist das Schaltvermögen des für Kurzschlußströme zuständigen Schaltsystems herabgesetzt, ebenso liegt der Mindestausschaltstrom wesentlich höher. Zusätzlich bedeutet dies, daß die Spannungsfestigkeit nach erfolgter Abschaltung auf einem kürzeren Bereich der Sicherung erreicht werden muß. Dies ist bedenklich, da dadurch Rückzündungen auftreten können.

Des weiteren können Vollbereichsicherungen dieser Bauweise nicht in allen Abmessungen gebaut werden. So lassen sich diese HH-Sicherungen für die kleine Baureihe der 20-kV-HH-Sicherung aus technischer Sicht nicht verwirklichen.

Der Erfindung liegt daher das Problem zugrunde, anstelle der bekannten Vollbereichsicherung eine Ganzbereichsicherung zu schaffen, die in der Lage ist, jeden Strom, bis hin zum Nennausschaltstrom, sicher und nachweisbar zu unterbrechen. Dabei sollen ohne Einschränkung der Ansprechcharakteristik im Kurzschlußbereich alle nach der DIN-Vorschrift möglichen Abmessungen erreicht werden können, wobei zudem Kombinationen mit Schaltgeräten vermieden werden sollten, um eine wirtschaftliche bzw. kostengünstige Ausführung zu erreichen.

Zwar ist aus der US-Patentschrift 4 189 694 eine Sicherung nach dem Oberbegriff des Hauptanspruchs bekannt, bei der jedoch der Auslösedraht dazu dient, einen Bewegungsinitiator im Falle einer Störung mit Strom zu versorgen. Dieser Draht darf also in keinem Fall durchtrennt werden. Zudem ist diese Sicherung nicht für den Bereich kleiner Überströme geeignet, weil sie auf die sich aufgrund der Überströme entstehende Erwärmung nicht reagiert, sondern allenfalls erst bei Auftreten der ersten Lichtbögen.

Auf der Basis des erfinderischen Grundgedankens einer Kombination, nämlich das Zerstören bzw. Auftrennen des bzw. der Schmelzleiter, sowohl in seiner bzw. ihrer flüssigen als auch seiner bzw. ihrer festen Phase zu ermöglichen, besteht die Lösung in den Merkmalen des Hauptanspruchs, wobei vorzugsweise der Auslösedraht ein zu dem Schmelzeinsatz oder den Schmelzeinsätzen parallel geschalteter Widerstandsdraht ist und jeder Schmelzeinsatz vorzugsweise als Schmelzleiter ausgebildet und mit mehreren elektrisch in Reihe liegenden Engstellen versehen ist. Es wird also durch zusätzliche einfache Mittel ein mechanisches Auftrennen der Schmelzleiter, und zwar grundsätzlich an beispielsweise durch Ausstanzungen geschaffenen Engstellen be-wirkt, so daß auch die Unterbringung des Sicherungseinsatzes in einem Rohrkörper mit den zuvor erwähnten Abmessungsvorteilen möglich ist.

Mit der Erfindung wird somit eine Ganzbereichsicherung geschaffen, die nur noch gelegenheitsweise durch Schmelzwirkung ausgelöst wird, so daß die Begriffe "Schmelzsicherung" und "Schmelzdraht" hier nur bedingt gelten, da auf einfache Weise das Abschalten der Überströme nicht nur auf das Prinzip des Durchschmelzens des Schmelzdrahtes beschränkt ist, sondern zusätzlich ein bewußt herbeigeführtes mechanisches Auftrennen desselben Schmelzdrahtes eingeleitet wird.

Für die erfindungsgemäße Lösung wird unter Übernahme der Bauweise und damit der bekannten Vorzüge der Teilbereichsicherung zum Schalten der Ströme im Überlastbereich mindestens ein Teil der elektrisch in Reihe liegenden Engstellen (Kerben oder Löcher) der Schmelzleiter bei Auftreten der Lichtbogenspannung mechanisch parallel und gleichzeitig aufgetrennt.

Als weiterer Vorteil ist zu erwähnen, daß die eingangs geschilderten Schwierigkeiten im Übergangsbereich zwischen Kurzschluß und Überlastbereich bei der Erfindung dadurch vermieden werden können, daß keine räumliche Beschränkung mehr besteht und durch geeignete Lot- sowie Wächterwahl eine optimale Anpassung an die jeweils bestehenden Anforderungen möglich ist.

Die Auslösung zur Auftrennung der Schmelzdrähte erfolgt vorzugsweise durch ein mechanisches Stellglied, das mit einem vorgespannten Kraftspeicher verbunden ist, der durch thermische Auslösung angetrieben wird, oder elektrisch durch einen zusätzlichen dünnen Widerstandsdraht, der bedingt durch den Spannungsabfall an den ersten auftretenden Schmelzlichtbögen innerhalb des Schmelzdrahtes durchschmilzt.

Ein weiterer Vorteil der erfindungsgemäßen Lösung besteht insbesondere darin, daß der Schmelzleiter bzw. die parallel zueinander angeordneten Schmelzleiter eine Doppelfunktion übernehmen, d.h. im Kurzschlußbereich führt die nicht mehr ausreichend abzuleitende Joulesche Wärme zum Durchschmelzen des Widerstandsdrahts und im Bereich vom Mindestausschaltstrom bis Nennstrom der Sicherung zum mechanischen Auftrennen bzw. Zerreißen des Silberdrahts.

Durch dieses Prinzip wird im Überlastfall eine Art Kaskadenschaltung erzeugt, wobei hintereinanderliegende Engstellen im Schmelzdraht aufgetrennt und entsprechend der Anzahl der Engstellen offene Trennstrecken gebildet werden.

Durch die erfindungsgemäße Anordnung lassen sich in überraschender, nicht zu erwartender Weise ordnungsgemäße und reproduzierbare Abschaltergebnisse im Übergangsbereich des Mindestausschaltstroms erzielen. Für die erfindungsgemäße Ganzbereichsicherung können die Baulängen wie erwähnt gemäß der DIN-Vorschrift beibehalten werden, wobei vorteilhafterweise das Schaltsystem nicht aufgeteilt wird, d.h. die Konstruktion des keramischen Isolierkörpers mit den aufgewickelten Schmelzdrähten kann bestehen bleiben. Dadurch können z.B. auch die kleinen Baugrößen gemäß der DIN-Vorschrift mit der vorgeschlagenen Anordnung ausgeführt werden.

Im Versorgungsnetz können daher HH-Sicherungen ohne merklichen Aufwand durch diese neue Ganzbereichsicherung ausgetauscht werden. In Netzen ist vielfach der Gebrauch von Teilbereichsicherungen als alleiniger Schutz üblich. Niedrige Fehlerströme, die über längere Zeit auftreten können, führen i.a. zu Störungen bzw. Beschädigung des Teilbereich-Sicherungseinsatzes. Statt der aufwendigen Umrüstung auf Sicherungs-Schaltgeräte-Kombinationen können in diesen Fällen idealerweise die vorgeschlagenen Ganzbereichsicherungen eingesetzt werden.

Als bevorzugtes Anwendungsgebiet der Erfindung kommt insbesondere der hochspannungsseitige Schutz von Ortsnetztransformatoren unter sowohl Innenraum- als auch Freiluftbedingungen in Frage.

Für die Erfindung ist eine Vielzahl von Ausführungen möglich. So gibt bei HH-Sicherungen mit Schlagstift- oder Kennmelder-Einrichtung ein innerhalb der Sicherung angeordneter Haltedraht eine vorgespannte Feder frei und löst den Schlagstift aus. Für die vorliegende Erfindung wird beispielsweise vorgeschlagen, das Prinzip mit Haltedraht und vorgespannter Feder zur Freigabe eines mechanischen Stellgliedes zu übernehmen. Der Haltedraht kann parallel zum Schmelzdraht gewickelt werden oder durch den Innenkanal des Sternkörpers geführt werden. Der Federspeicherantrieb kann sich wie bei der Schlagstift-Einrichtung an der Stirnseite des Sternkörpers befinden.

Das Durchtrennen der Schmelzleiter kann durch Zug- und/oder Scherwirkung erfolgen. Bevorzugt werden dazu Engstellen, die geometrisch hintereinander liegen, mit einem Stab, vorzugsweise einem Drehstab, in Verbindung gebracht, der durch Drehung eine Zugspannung insbesondere an den geschwächten Querschnitten erzeugt. Der Drehstab kann z.B. anstelle eines Steges am Sternkörper bzw. zwischen zwei Stegen angeordnet oder in der Achse des Sternkörpers geführt werden.

Die mechanische Verbindung mit den Schmelzleitern kann durch Lochung des Drehstabes erfolgen; einfacher ist es, den Drehstab zweiteilig zu gestalten. Anstelle des Haltedrahts kann der Federkraftspeicher mit einer selektiven Lötstelle verbunden sein, deren Schmelzpunkt auf den Nennstrom der Sicherung abgestimmt ist. Durch Einbau dieser Lötstelle wird erreicht, daß bei Erwärmung der Sicherung auf eine für das Sicherungsgehäuse noch nicht kritische Temperatur durch Verflüssigung des Lots die vorgespannte Feder freigegeben wird und gegebenenfalls über eine Umlenkung der Kräfte ein Zerreißen der Schmelzdrähte bewirkt wird.

Anstelle der Lötstelle, die beispielsweise aus einer eutektischen Legierung bestehen kann, ist es auch möglich, die thermische Auslösung und den Verstellweg des Stabes z.B. durch ein Bimetall oder Formgedächtnis-Element zu bewirken, wobei hierbei gegebenenfalls auf die genannte Federspeicher-Einheit verzichtet werden könnte.

In Ausgestaltung der Erfindung läßt sich die funktionelle und räumliche Zuordnung der Komponenten optimieren, ohne daß sich dadurch zusätzlicher Platzbedarf ergibt.

Durch die DIN 43 625 sind der Aufbau und die Abmessungen von gattungsgemäßen Sicherungen bestimmt, wobei endseitig Kontaktkappen vorgeschriebener Abmessungen vorgesehen sind. Die Innenräume dieser Kontaktkappen sind mit einer Blechabdeckung gegenüber dem eigentlichen Sicherungskörper abgeschlossen, um einen Austritt des im Sicherungskörper befindlichen Quarzsandes zu verhindern.

Die Erfindung macht sich diesen Kappenhohlraum zunutze und schlägt in bevorzugter Ausführung vor, daß der Kraftspeicher in mindestens einer der Kontaktkappen der Sicherung angeordnet ist. Im Interesse einer raumsparenden Vereinfachung der Ausführung und des Bewegungsablaufs ist das Stellglied vorzugsweise als in Richtung seiner Längsachse zu bewegender Zug- und/oder Druckstab ausgebildet und ein Sperrmechanismus in mindestens einer der Kontaktkappen der Sicherung untergebracht, der den Stab im Normalzustand der Sicherung in einer das Auftrennen des Schmelzeinsatzes bzw. der Schmelzeinsätze verhindernden Position hält. Vorzugsweise ist der Stab zylindrisch und mit Schlitzen ausgestattet, durch die der oder die gewickelte(n) Schmelzleiter geführt ist bzw. sind, so daß im entsprechenden Betriebszustand bei Aktivierung des Stellgliedes durch dessen schlagartige Längsbewegung das mechanische Durchtrennen der Schmelz-leiter erfolgt. Um im gewünschten Zeitpunkt die Längsbewegung des Stabes zu verursachen, ist dieser vom Kraftspeicher beaufschlagt, welcher Vorspannung der Sperrmechanismus im normalen Betriebszustand der Sicherung entgegenwirkt. Der Sperrmechanismus besteht vorzugsweise aus einem von einem Haltedraht in Sperrstellung (Betriebslage) gehaltenen Hebelgestänge. Diese Konzeption führt zu einer zuverlässigen Sperrschloßkonstruktion, da sie aus nur wenigen Teilen besteht, für die eindeutige und einfach übersehbare Kräfte- und Bewegungsverhältnisse gelten.

Darüber hinaus eröffnet diese Konzeption eine weitere Optimierung unter Ausnutzung der ohnehin vorhandenen Hohlräume, indem in alternativer Ausgestaltung der Erfindung sowohl der Kraftspeicher als auch der Sperrmechanismus in derselben Kontakt kappe untergebracht sind.

Der erwähnte Haltedraht erfüllt die Funktion des Übertragungsgliedes für die beiden kombinierten Auslösungsursachen (elektrisch oder thermisch) und verknüpft dazu die beiden Auslöseelemente miteinander und hält gleichzeitig das Sperrschloß, insbesondere das für dieses vorgesehene Hebelgestänge in der Betriebslage, in der der Stab an einer Auftrennung der Schmelzeinsätze gehindert, d.h. ebenfalls in Betriebsposition gehalten wird.

Für die elektrische Auslösung eignet sich ein Widerstandsdraht, während für die thermische Auslösung u.a. eine selektive Lötstelle in Frage kommt. Der Haltedraht wird in diesem Fall vorzugsweise an seinem einen Ende mit der selektiven Lötstelle verbunden, während sein anderes Ende mit dem Widerstandsdraht verbunden ist und er selbst in geeigneter, nachfolgend beispielhaft noch zu erläuternder Weise den Sperrmechanismus in Betriebsposition hält. Bei Eintritt eines der beiden Auslösungsgründe findet eine Auftrennung der über den Haltedraht geschaffenen Verbindung statt, die ein Wirksamwerden des Sperrschlosses bzw. des Sperrmechanismus initiiert, wodurch sich der mit dem Sperrmechanismus gekoppelte Stab (Stellglied) schlagartig in axialer Richtung bewegt und dadurch das Durchtrennen der Schmelzeinsätze bewirkt.

Weitere Einzelheiten und Vorteile der Erfindung werden nachfolgend anhand der Beschreibung einiger bevorzugter, in den beigefügten Zeichnungen dargestellter Ausführungsbeispiele näher erläutert. Es zeigen:
- Fig. 1: einen Teil eines Schmelzdrahtes bzw. -leiters in einer möglichen Verwendungsausführung für die erfindungsgemäße Sicherung;
- Fig. 2: ein ausschnittsweises Schaltschema für die Sicherung;
- Fig. 3: einen Teil eines Sicherungseinsatzes, schematisch in seinem Aufbau;
- Fig. 4: einen Schnitt entlang der Linie IV-IV in Fig. 3;
- Fig. 5: eine Sicherung mit in den Kontaktkappen untergebrachtem Sperrschloß und Kraftspeicher, in schematischer Seitenansicht;
- Fig. 6: eine Ansicht gemäß Fig. 5, bei der das Sperrschloß und der Kraftspeicher in ein und derselben Kontaktkappe untergebracht sind; und
- Fig. 7: die Ausführung gemäß Fig. 6 mit zwei parallel geschalteten Druckfedern als Kraftspeicher, mit einer Draufsicht auf das Kraftübertragungsglied.

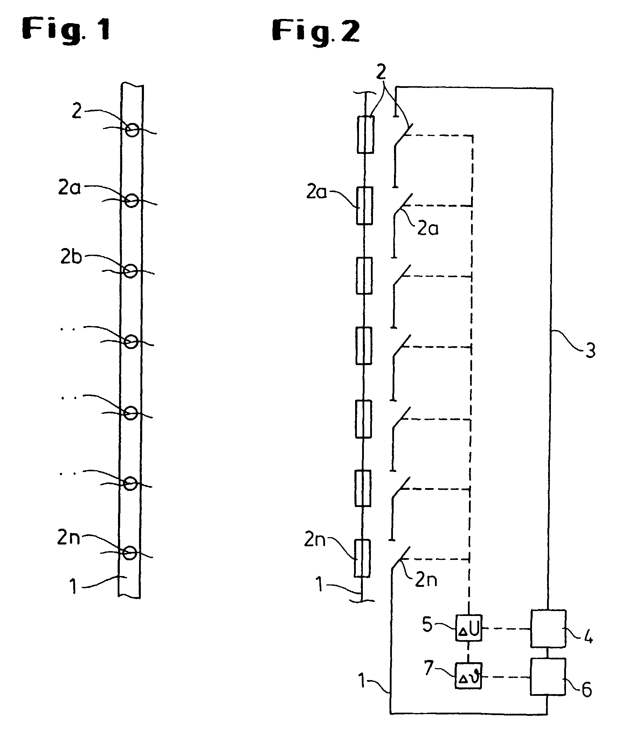

Gemäß Fig. 1 ist ein Schmelzleiter 1 mit mehreren Engstellen 2, 2a, 2b...2n versehen, die im dargestellten Beispiel als Löcher ausgeführt sind und Sollbruchstellen bilden, die elektrisch in Reihe liegen. Anstelle der Löcher können auch Kerben vorgesehen sein.

Fig. 2 zeigt am Beispiel nur eines Schmelzleiters 1 - wie die nachfolgenden Ausführungen zeigen, werden in der Praxis mehrere Schmelzleiter 1 elektrisch parallel gewickelt - schematisch den grundsätzlichen Schaltungsaufbau. Dabei sind die Engstellen 2, 2a...2n für den "Schmelzfall" symbolisch als Schmelzsicherungen dargestellt, während sie rechts daneben für den "mechanischen Auftrennfall" als geöffnete Schalter wiedergegeben sind.

Die in Reihe geschalteten Engstellen werden nach Erreichen einer kritischen Temperatur oder nach Erreichen einer bestimmten Spannung an einem Haltedraht durch eine Kraft gleichzeitig durchtrennt. Dabei können alternativ oder gleichzeitig im Schaltkreis über einen Kennmeldedraht 3 (Widerstandsdraht), der bereits bei der Teilspannung schmilzt, die bei Ansprechen einer Teilstrecke entsteht, ein elektrischer Wächter 4 (Sensor - Kennmeldedraht -) mit angeschlossenem Auslöser 5 mit Federkraftspeicher und/oder ein Wächter 6 (Sensor - selektive Lötstelle oder Thermowächter -), der ebenfalls an einen Auslöser 7 mit Federkraftspeicher angeschlossen sein kann, geschaltet sein.

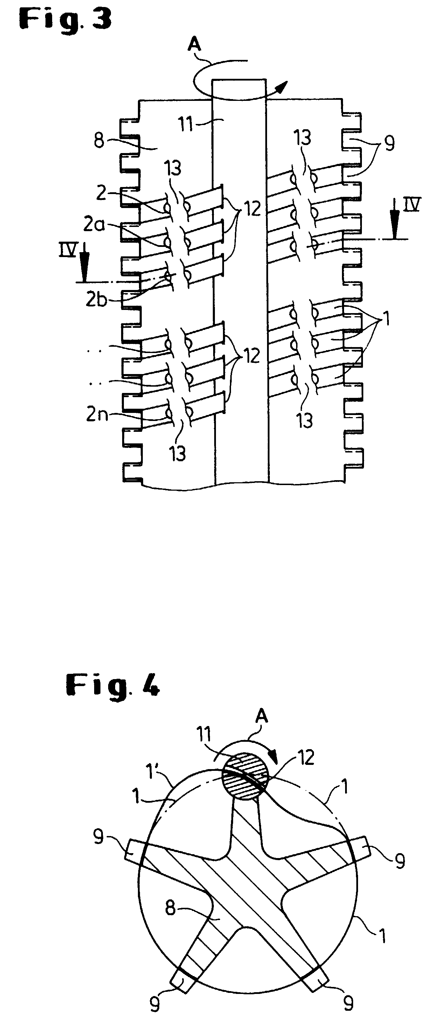

Aus der schematischen Seitenansicht gemäß Fig. 3 geht hervor, daß auf einen in seiner Querschnittsform der Fig. 4 zu entnehmenden Sternkörper 8 aus isolierendem Material drei elektrisch parallel geschaltete, bandförmige Schmelzleiter 1 parallel, im wesentlichen wendelartig gewickelt sind, und zwar zur Fixierung ihrer gegenseitig beabstandeten Lage in in den Stirnseiten der Sternkörperstege eingearbeitete Nuten 9 eingelegt.

Aus Fig. 4 geht hervor, daß im Bereich des Endes einer der Sternkörperstege ein drehbarer Stab 11 in geeigneter Weise drehbar gelagert ist, dessen Drehachse parallel zur Längsachse des Sternkörpers 8 verläuft und der mit durchgehenden, quer zu seiner Längsachse verlaufenden Schlitzen 12 versehen ist, durch die in Richtung der Drehachse des Stabes hintereinanderliegend die Schmelzleiter 1 in jedem Wickelgang geführt sind.

In Fig. 4 sind die Schmelzleiter 1 strichpunktiert in ihrer Normallage dargestellt, während die durchgezogene Linie 1' in etwa den Verlauf der Schmelzleiter 1 zeigt, wie er sich ergibt, wenn nach entsprechender, zuvor im einzelnen erläuterter Auslösung des Stabes 11 dieser entsprechend dem Pfeil A in Drehung versetzt wird. Dabei geraten die Schmelzleiter 1 durch Ausbeulen in die gezeigte Verformungslage und somit unter mechanische Zugbeanspruchung, bis sie an den Engstellen zerreißen, wie dies in Fig. 3 durch die entstandenen Spalte 13 dargestellt gestellt ist. Dies entspricht auch dem in Fig. 2 Zustand.

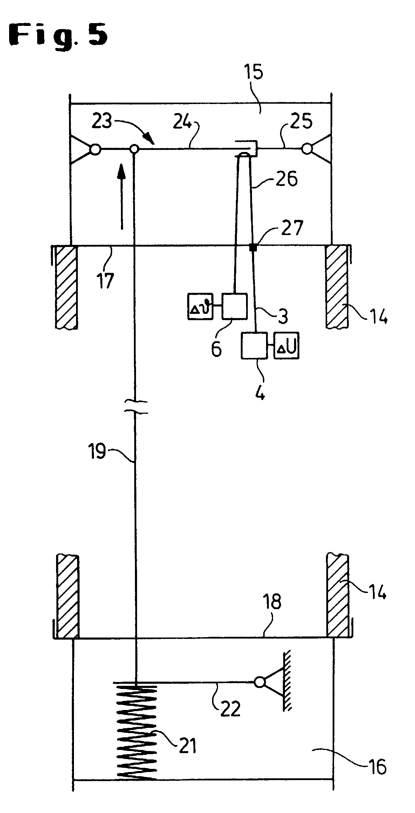

Der Auslösevorgang für die Drehbewegung des Stabes 11 wurde eingangs eingehend beschrieben, so daß er hier keiner weiteren Erläuterung bedarf. Erwähnt sei noch, daß das Auftrennen an den Engstellen nicht nur durch Zug-, sondern auch durch Scherkräfte bewirkt werden kann. Hierzu werden nachfolgend anhand der Fig. 5 bis 7 besonders bevorzugte Ausführungsbeispiele beschrieben.

Eine erste Variante dieser erfindungsgemäß mit einem Zug- und/oder Druckstab als scherendes Stellglied ausgerüsteten weiteren Gruppe von Ganzbereichsicherungen ist in Fig. 5 in ihrem Mittelbereich unterbrochen dargestellt und weist zunächst einen herkömmlichen, normgerechten Aufbau auf; sie besteht demgemäß aus einem zylindrischen, mit Quarzsand gefüllten Sicherungskörper 14, der stirnseitig mit je einer Kontaktkappe 15 und 16 versehen ist, wobei an jeder Stirnseite in der jeweiligen Kappe eine Blechabdeckung 17, 18 vorgesehen ist, die einen Austritt des Quarzsandes verhindert.

Zur Vereinfachung der Darstellung sind hier die im Quarzsand eingebetteten und in aller Regel auf einen keramischen Isolierkörper aufgewickelten Schmelzleiter bzw. -drähte nicht dargestellt. Mit dem zuvor beschriebenen Ausführungsbeispiel äquivalente Bauteile werden nachfolgend mit denselben Bezugszeichen beschrieben.

Erfindungsgemäß besitzt auch diese Sicherung sowohl einen thermischen Wächter 6 als auch einen elektrischen Wächter 4. Der thermische Wächter 6 kann auch hier beispielsweise durch eine selektive Lötstelle gebildet werden, während der elektrische Wächter 4 durch den Widerstandsdraht 3 seine Funktion erhält.

Das das erwähnte mechanische Auftrennen der Schmelzleiter bewirkende Stellglied ist hier als Zug- oder Druckstab 19 ausgebildet, der sich im Auslösefall in Richtung seiner Längsachse schlagartig gemäß dem Pfeil bewegt und dabei die durch beispielsweise seine Schlitze geführten Schmelzleiter durchtrennt. Dazu ist der Stab 19 mechanisch vorgespannt, wobei im vorliegenden Ausführungsbeispiel der Kraftspeicher aus mindestens einer Druckfeder 21 besteht, die am unteren Ende des Stabes angreift, und zwar über eine schwenkbar gelagerte Aufnahmeplatte 22, an der das untere Ende des Stabes 19 angelenkt ist. Wie Fig. 5 zeigt, ist der Kraftspeicher im ohnehin bei derartigen Sicherungen vorhandenen Kappenhohlraum untergebracht, wobei für den Stab 19 lediglich eine sanddichte Durchführung durch die Blechabdeckung 18 vorzusehen ist.

Der den Stab 19 entgegen der Vorspannung der Druckfeder 21 in unwirksamer Position, also in Betriebslage haltende Sperrmechanismus ist als Sperrschloß 23 in der anderen Kontaktkappe 15 untergebracht und besteht im wesentlichen aus einem Hebelgestänge, nämlich einem längeren Hebel 24 und einem kürzeren Hebel 25, die gegenüberliegend mit einem Ende an der Kappenwand gelenkig gelagert sind, während ihre freien Enden in geeigneter Weise in mechanischem Eingriff bzw. Wirkverbindung stehen.

In einem im Vergleich zur restlichen Hebellänge relativ kurzen Abstand greift das obere Ende des Stabes 19 am Hebel 24 an, während entgegen der auf den Hebel 24 wirkenden, nach oben gerichteten Kraft der kürzere Hebel 25 eine nach unten gerichtete Haltekraft aufbringt, so daß das Sperrschloß 23 sich während des Betriebes in der in Fig. 5 dargestellten Lage befindet. Um die Gegenkraft auf den Hebel 25 derart aufzubringen, daß sie bei Eintritt eines Störfalls - gleichgültig ob thermisch oder elektrisch bedingt - aufgehoben wird, um den auftrennenden Stab insoweit freizugeben, ist der thermische Wächter bzw. die dafür vorgesehene selektive Lötstelle 6 mit einem Haltedraht 26 verbunden, der um das freie Ende des kurzen Hebels 25 gelegt ist und mit seinem anderen Ende mit dem Widerstandsdraht 3 an der Stelle 27 beispielsweise durch einen Knoten verbunden ist. Der Haltedraht 26 ist im vorliegenden Ausführungsbeispiel ca. 0,2 mm und der Widerstandsdraht 3 ca. 0,25 mm dick.

Damit der Haltedraht 26 auf jeden Fall bei Eintritt einer Störung, gleichgültig ob der einen oder der anderen Art, den kürzeren Hebel 25 freigibt und somit der Hebel 24 sich nach oben bewegen kann, ist der Haltedraht 26 beispielsweise mittels einer Bucht oder eines Auges oder eines Rundtörns über das Ende des Hebels 25 gelegt. Schmilzt nun beispielsweise die selektive Lötstelle 6 unter dem Einfluß einer bei kleinen Überströmen entstandenen Wärmeentwicklung, dann löst sich der Haltedraht 26 von der Lötstelle 6 und gibt den Hebel 25 frei. Gleiches geschieht im Falle einer elektrischen Auslösung, d.h. in dem Fall, daß bedingt durch Spannungsabfall an den ersten auftretenden Schmelzlichtbögen innerhalb des Schmelzleiters eine Stromverlagerung auf den Widerstandsdraht 3 stattfindet, die diesen zum Durchschmelzen bringt, dann wird aufgrund der Verknotung 27 der Haltedraht 26 wiederum nachgeben bzw. unter dem Einfluß der über den Hebel 24 auf den Hebel 25 wirkenden Vorspannkraft der Druckfeder 21 aus seiner Umschlingposition ausrauschen.

Entsprechend der für die untere Kappe 16 erwähnten sanddichten Durchführung durch das Blech 18 sind in der Blechabdeckung 17 sowohl für den Stab 19 als auch für die beiden Buchtenden des Haltedrahts 26 sanddichte Durchführungen vorgesehen, die sowohl eine zuverlässige Stabbewegung als auch das Durchlaufen des Haltedrahts in jedem Störfall reibungslos gewährleisten. In diesem Zusammenhang ist zu betonen, daß die Verknüpfung 27 lediglich zur Veranschaulichung wie dargestellt hervorgehoben ist, ohne daß sie etwa einen Anschlag oder dergleichen am Blech 17 bedeutet oder gar die freie Drahtbewegung im Auslösefall behindert.

Die zuvor beschriebene und in Fig. 5 dargestellte Hebelanordnung macht deutlich, daß der längere Hebel 24 die Vorspannkraft in übersetzender Wirkung zusammen mit dem kürzeren Hebel 25 hält, wobei der kürzere Hebel 25 als quasi durch den Haltedraht in einer eine Aufwärtsbewegung des längeren Hebels 24 sperrenden Position gehalten wird.

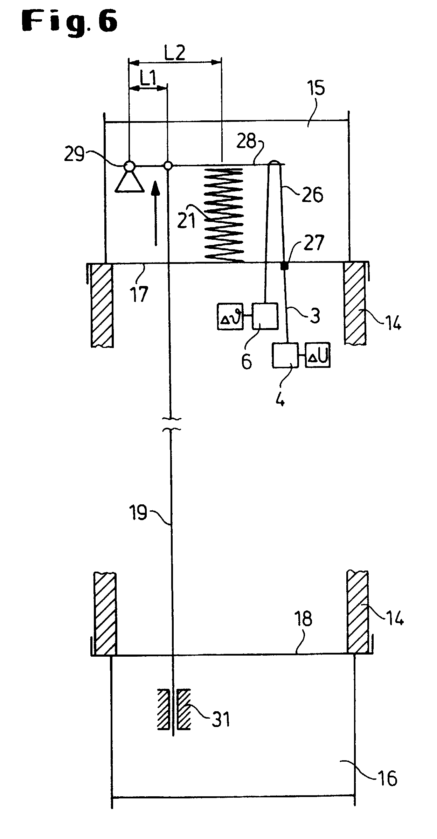

Fig. 6 zeigt eine weitere Ausführungsmöglichkeit, die in besonders raumsparender Weise das Sperrschloß und den Kraftspeicher 21 in nur einer Kappe 15 unterbringt. Nachfolgend werden die Teile, die solchen der Fig. 5 entsprechen, mit denselben Bezugszeichen beschrieben.

Der wesentliche Unterschied der Ausführung gemäß Fig. 6 gegenüber der gemäß Fig. 5 besteht darin, daß das Sperrschloß anstatt zwei nunmehr nur einen Hebel 28 benötigt, der mit seinem einen Ende bei 29 schwenkbar gelagert ist. Am freien Ende des Hebels 28 greift der Haltedraht 26 an, der in der im Zusammenhang mit Fig. 5 beschriebenen Weise den Widerstandsdraht 3 und die Lötstelle 6 miteinander verbindet und den Hebel 28 entgegen der durch die ebenfalls am Hebel 28 unterseitig angreifende Druckfeder 21 hervorgerufenen Vorspannkraft in der dargestellten Betriebslage hält. Schließlich greift auch der Stab 19 am Hebel 28 an, und zwar mit einem geringeren Abstand L1 vom Schwenklager 29 als die Druckfeder 21, so daß sich eine Hebelübersetzung L2:L1 ergibt mit der Folge, daß durch den längeren Hebelarm L2 der Feder 21 eine ein zuverlässiges Auftrennen der Schmelzleiter garantierende Kraftübersetzung im Auslösefall erzielt wird. Andererseits garantiert der wiederum gegenüber dem Federhebelarm noch größere Hebelarm für die Angriffsstelle des Haltedrahtes 26, daß dieser die erforderliche Sperrfunktion erfüllen kann.

Auch bei diesem Ausführungsbeispiel, bei dem die Feder 21 direkt am Hebel 28 angreift, erfolgt im Auslösefall die Stabbewegung in derselben Richtung wie beim Ausführungsbeispiel gemäß Fig. 5, wie es auch der Pfeil zeigt. Mit seinem unteren Ende ist der Stab 19 in einer in der Kappe 16 untergebrachten Führung 31 gehalten.

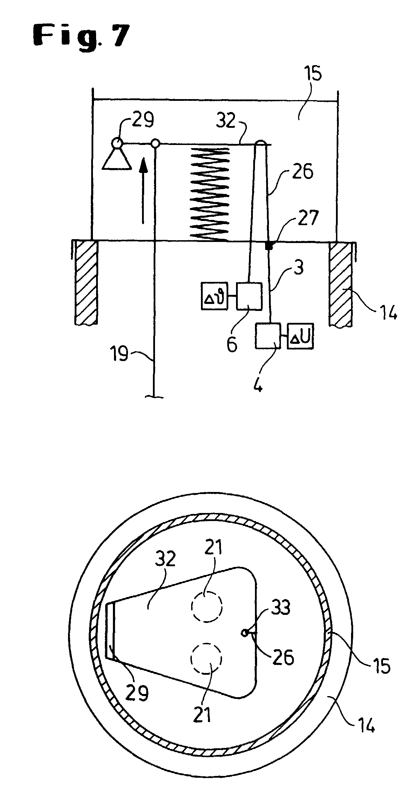

Fig. 7 zeigt schließlich nochmals die obere Kontaktkappe 15 mit vorgespanntem Sperrschloß, wobei der untere Teil der Fig. 7 eine bevorzugte Hebelausführung zeigt, nämlich in Form einer Aufnahmeplatte 32, die es ermöglicht, daß zwei Federn 21 als Kraftspeicher eingesetzt werden können. An dem dem Schwenklager 29 gegenüberliegenden Ende besitzt die Aufnahmeplatte 32 eine Bohrung 33, durch die der Haltedraht 26 geführt ist.

## Patentansprüche

1. Sicherung, insbesondere Hochleistungssicherung mit mindestens einem Schmelzeinsatz (Schmelz-leiter) und Mitteln zum mechanischen Auftrennen des Schmelzeinsatzes oder der Schmelzeinsätze mittels eines mit einem Kraftspeicher verbundenen mechanischen Stellglieds und mit einem Auslösedraht, gekennzeichnet durch eine elektrische Auslösung der Auftrennung im mittleren Strombereich, bei der der Auslösedraht (3) bedingt durch Spannungsabfall an den ersten auftretenden Schmelzlichtbögen innerhalb des Schmelzleiters (1) und dadurch bewirkte Stromverlagerung auf den Auslösedraht durchschmilzt und dadurch den Kraftspeicher auslöst, und durch eine thermische Auslösung der Auftrennung, die im unteren Strombereich aufgrund von Wärmeentwicklung, die bei den kleinen Überströmen entsteht, den Kraftspeicher (21) auslöst.

2. Sicherung nach Anspruch 1, dadurch gekennzeichnet, daß der Auslösedraht ein zu dem Schmelzleiter (1) oder den Schmelzleitern (1) parallel geschalteter Widerstandsdraht (3) ist.

3. Sicherung nach Anspruch 1 oder 2, dadurch gekennzeichnet, daß der Widerstandsdraht der Kennmeldedraht (3) ist.

4. Sicherung nach einem der Ansprüche 1 bis 3, dadurch gekennzeichnet, daß jeder Schmelzleiter (1) mit mehreren elektrisch in Reihe liegenden Engstellen (2, 2a...2n) versehen ist.

5. Sicherung nach einem der Ansprüche 1 bis 4, dadurch gekennzeichnet, daß der bzw. die Schmelzleiter (1) auf einen Isolierkörper gewickelt ist bzw. sind.

6. Sicherung nach Anspruch 5, dadurch gekennzeichnet, daß der Isolierkörper als sternförmiger Schmelzleiterträger (8) mit genuteten Stegen ausgeführt ist.

7. Sicherung nach Anspruch 6, gekennzeichnet durch mehrere parallel gewickelte, vorzugsweise in die Nuten (9) eingelegte Schmelzleiter (1).

8. Sicherung nach einem der Ansprüche 1 bis 7, dadurch gekennzeichnet, daß der gesamte Schmelzleiteraufbau in Quarzsand eingebettet ist.

9. Sicherung nach einem der Ansprüche 4 bis 8, dadurch gekennzeichnet, daß die Engstellen (2, 2a...2n) Löcher sind.

10. Sicherung nach einem der Ansprüche 4 bis 8, dadurch gekennzeichnet, daß die Engstellen (2, 2a...2n) Kerben sind.

11. Sicherung nach einem der Ansprüche 1 bis 10, dadurch gekennzeichnet, daß das mechanische Auftrennen der Schmelzleiter (1) parallel und gleichzeitig an zumindest einem Teil der elektrisch in Reihe liegenden Engstellen (2, 2a...2n) jedes Schmelzleiters (1) erfolgt.

12. Sicherung nach einem der Ansprüche 1 bis 11, gekennzeichnet durch einen Haltedraht (3,26), der eine vorgespannte Feder (21) zur Auslösung des mechanischen Stellgliedes (11,19) freigibt.

13. Sicherung nach Anspruch 12, dadurch gekennzeichnet, daß der Haltedraht der Widerstands- oder Kennmeldedraht (3) ist.

14. Sicherung nach Anspruch 12 oder 13, dadurch gekennzeichnet, daß der Haltedraht (3) parallel zu dem oder den Schmelzleiter(n) (1) gewickelt ist.

15. Sicherung nach Anspruch 12 oder 13, dadurch gekennzeichnet, daß der Haltedraht (3) durch einen Innenkanal im sternförmigen Schmelzleiterträger (8) verläuft.

16. Sicherung nach einem der Ansprüche 1 bis 15, dadurch gekennzeichnet, daß sich der Kraftspeicher an der Stirnseite des sternförmigen Schmelzleiterträgers (8) befindet.

17. Sicherung nach einem der Ansprüche 1 bis 16, gekennzeichnet durch einen Federkraftspeicherantrieb.

18. Sicherung nach einem der Ansprüche 6 bis 17, gekennzeichnet durch einen im wesentlichen parallel zu den Stegen des sternförmigen Schmelzleiterträgers (8) verlaufenden Stab (11,19) als Stellglied, der an über die Länge des Schmelzleiterträgers (8) im wesentlichen fluchtenden Stellen des oder der Schmelzleiter (1) angreift.

19. Sicherung nach Anspruch 18, dadurch gekennzeichnet, daß der Stab ein Scherstab ist.

20. Sicherung nach Anspruch 18 oder 19, dadurch gekennzeichnet, daß der Stab ein Drehstab (11) ist.

21. Sicherung nach einem der Ansprüche 18 bis 20, dadurch gekennzeichnet, daß der Stab (11) an einem Steg des sternförmigen Schmelzleiterträgers (8) gelagert ist oder diesen ersetzt.

22. Sicherung nach einem der Ansprüche 18 bis 20, dadurch gekennzeichnet, daß der Stab (11) zwischen zwei Stegen des sternförmigen Schmelzleiterträgers (8) gelagert ist.

23. Sicherung nach einem der Ansprüche 18 bis 20, dadurch gekennzeichnet, daß der Stab (11) in der Achse des sternförmigen Schmelzleiterträgers (8) gelagert ist.

24. Sicherung nach einem der Ansprüche 20 bis 23, gekennzeichnet durch Lochungen oder Schlitze (12) im Drehstab (11), durch die der oder die gewickelte(n) Schmelzleiter (1) geführt ist oder sind.

25. Sicherung nach einem der Ansprüche 20 bis 23, gekennzeichnet durch einen längsgeteilten Drehstab, der zwischen sich die fluchtenden Stellen des oder der Schmelzleiter(s) (1) aufnimmt.

26. Sicherung nach einem der Ansprüche 1 bis 25, dadurch gekennzeichnet, daß der Kraftspeicher mit einer selektiven Lötstelle (6) verbunden ist.

27. Sicherung nach Anspruch 26, dadurch gekennzeichnet, daß die Lötstelle aus einer eutektischen Legierung besteht.

28. Sicherung nach einem der Ansprüche 1 bis 25, gekennzeichnet durch ein Bimetall oder ein Formgedächtnis-Element zur thermischen Auslösung.

29. Sicherung nach Anspruch 28, dadurch gekennzeichnet, daß das Bimetall oder das Formgedächtnis-Element den Verstellweg des Stabes bewirkt.

30. Sicherung nach einem oder mehreren der Ansprüche 1 bis 19 und 26 bis 29, dadurch gekennzeichnet, daß der Kraftspeicher (21) in mindestens einer der Kontaktkappen (15,16) der Sicherung angeordnet ist.

31. Sicherung nach Anspruch 30, gekennzeichnet durch einen Sperrmechanismus (23,28,32) in mindestens einer der Kontaktkappen (15, 16) der Sicherung.

32. Sicherung nach Anspruch 30 oder 31, gekennzeichnet durch einen Zug- und/oder Druckstab (19) als Stellglied.

33. Sicherung nach einem der Ansprüche 30 bis 32, gekennzeichnet durch einen zylindrischen Stab (19).

34. Sicherung nach einem der Ansprüche 30 bis 33, gekennzeichnet durch Schlitze im Stab (19), durch die der oder die gewickelte(n) Schmelzleiter geführt ist bzw. sind.

35. Sicherung nach einem der Ansprüche 30 bis 34, dadurch gekennzeichnet, daß der Stab (19) parallel zur Sicherungslängsachse ausgerichtet ist.

36. Sicherung nach einem der Ansprüche 30 bis 35, dadurch gekennzeichnet, daß der Stab (19) direkt oder indirekt vom Kraftspeicher (21) beaufschlagt ist.

37. Sicherung nach einem der Ansprüche 31 bis 36, dadurch gekennzeichnet, daß der Sperrmechanismus (23,28,32) aus einem von einem Haltedraht (26) in Sperrstellung (Betriebslage) gehaltenen Hebelgestänge (24,25; 28;32) besteht.

38. Sicherung nach Anspruch 37, dadurch gekennzeichnet, daß der Haltedraht (26) mit seinem einen Ende mit dem Auslöse-(Widerstands-)draht (3) und mit seinem anderen Ende mit der selektiven Lötstelle (6) verbunden ist.

39. Sicherung nach einem der Ansprüche 30 bis 38, dadurch gekennzeichnet, daß der Stab (19) mit dem Hebelgestänge (24,25;28;32) zusammenwirkt.

40. Sicherung nach einem der Ansprüche 37 bis 39, dadurch gekennzeichnet, daß der Haltedraht (26) das Hebelgestänge (24,25;28;32) entgegen der Vorspannung des Kraftspeichers (21) in Betriebslage hält.

41. Sicherung nach einem der Ansprüche 30 bis 40, dadurch gekennzeichnet, daß der Kraftspeicher (21) aus mindestens einer Druckfeder besteht.

42. Sicherung nach einem der Ansprüche 37 bis 41, dadurch gekennzeichnet, daß das Hebelgestänge aus zwei einendseitig schwenkbar gelagerten Hebeln (24, 25) besteht, deren freien Enden wirkverbunden sind.

43. Sicherung nach Anspruch 42, dadurch gekennzeichnet, daß die Hebel (24, 25) ungleich lang sind.

44. Sicherung nach Anspruch 43, dadurch gekennzeichnet, daß der Stab (19) am längeren Hebel (24) und der Haltedraht (26) am kürzeren Hebel (25) angreift.

45. Sicherung nach Anspruch 44, dadurch gekennzeichnet, daß der Stab (19) näher zum Lagerende als zum freien Ende am längeren Hebel (24) und der Haltedraht (26) am freien Ende des kürzeren Hebels (25) angreift.

46. Sicherung nach einem der Ansprüche 32 bis 45, dadurch gekennzeichnet, daß der Stab (19) über eine schwenkbar gelagerte Aufnahmeplatte (22) an seinem nicht mit dem Sperrmechanismus verbundenen Ende vom Kraftspeicher (21) beaufschlagt ist.

47. Sicherung nach einem der Ansprüche 30 bis 46, dadurch gekennzeichnet, daß der Kraftspeicher (21) und gegebenenfalls die Aufnahmeplatte (22) in der einen Kontaktkappe (16) und der Sperrmechanismus (23) in der anderen Kontaktkappe (15) untergebracht sind.

48. Sicherung nach einem der Ansprüche 30 bis 46, dadurch gekennzeichnet, daß der Kraftspeicher (21) und der Sperrmechanismus (28,32) in derselben Kontaktkappe (15) untergebracht sind.

49. Sicherung nach Anspruch 48, dadurch gekennzeichnet, daß der Sperrmechanismus nur einen einendseitig schwenkbar gelagerten (29) Hebel (28) aufweist.

50. Sicherung nach Anspruch 49, dadurch gekennzeichnet, daß der Haltedraht (26) am freien Hebelende angreift.

51. Sicherung nach Anspruch 50, dadurch gekennzeichnet, daß der Kraftspeicher (21) zwischen dem Haltedraht (26) und dem am Hebel (28) angelenkten Stab (19) am Hebel (28) angreift.

52. Sicherung nach einem der Ansprüche 48 bis 51, gekennzeichnet durch eine Aufnahmeplatte (32) als Hebel.

53. Sicherung nach einem der Ansprüche 31 bis 52, dadurch gekennzeichnet, daß die schwenkbaren Teile (22, 24, 25, 28, 32) des Sperrmechanismus zumindest teilweise an der Kappenwand gelagert sind.

54. Sicherung nach einem der Ansprüche 37 bis 53, dadurch gekennzeichnet, daß der Haltedraht (26) das Hebelende umschlingt.

55. Sicherung nach Anspruch 54, dadurch gekennzeichnet, daß der Haltedraht (26) mittels eines Teiltörns oder mindestens eines Rundtörns, mittels einer Bucht oder mittels eines Auges am Hebel (25, 28, 32) befestigt ist.

## Claims

1. A fuse, in particular a high-breaking-capacity fuse comprising at least one fuse link (fuse element) and means for mechanical separation of the fuse link or fuse links by means of a mechanical actuator connected to an energy storage mechanism and also a tripping wire, characterised by means for electrical tripping of the separation in the intermediate current region, wherein the tripping wire (3) melts through due to a voltage drop at the first melting arc to occur within the fuse element (1) and the resulting transfer of current to the tripping wire, thereby tripping the energy storage mechanism, and by means for thermal tripping of the separation which trips the energy storage mechanism (21) in the lower current region due to heat evolution which occurs with the small excess currents.

2. A fuse according to claim 1, characterised in that the tripping wire is a resistance wire (3) connected in parallel to the fuse element or fuse elements (1).

3. A fuse according to claim 1 or claim 2, characterised in that the resistance wire is the indicator wire (3).

4. A fuse according to any one of claims 1 to 3, characterised in that each fuse element (1) is provided with several narrow points (2, 2a ... 2n) electrically in series.

5. A fuse according to any one of claims 1 to 4, characterised in that the fuse element or elements (1) is or are wound on an insulating body.

6. A fuse according to claim 5, characterised in that the insulating body is in the form of a star-shaped fuse element carrier (8) having grooved arms.

7. A fuse according to claim 6, characterised by several parallel-wound fuse elements (1), preferably placed in the grooves (9).

8. A fuse according to any one of claims 1 to 7, characterised in that the whole fuse element structure is embedded in quartz sand.

9. A fuse according to any one of claims 4 to 8, characterised in that the narrow points (2, 2a . . . 2n) are holes.

10. A fuse according to any one of claims 4 to 8, characterised in that the narrow points (2, 2a . . . 2n) are notches.

11. A fuse according to any one of claims 1 to 10, characterised in that the mechanical separation of the fuse elements (1) takes place parallel to and simultaneously at at least one part of the electrically-in-series narrow points (2, 2a . . .2n) of each fuse element (1).

12. A fuse according to any one of cldims 1 to 11, characterised by a retaining wire (3, 26) which releases a pretensioned spring (21) to trigger the mechanical actuator (11, 19).

13. A fuse according to claim 12, characterised in that the retaining wire is the resistance or indicator wire (3).

14. A fuse according to claim 12 or claim 13, characterised in that the retaining wire (3) is wound parallel to the fuse element or elements (1).

15. A fuse according to claim 12 or claim 13, characterised in that the retaining wire (3) runs through an internal passage in the star-shaped fuse element carrier (8).

16. A fuse according to any one of claims 1 to 15, characterised in that the energy storage mechanism is located at the front of the star-shaped fuse element carrier (8).

17. A fuse according to any one of claims 1 to 16, characterised by having a spring energy storage drive.

18. A fuse according to any one of claims 6 to 1 7, characterised by having as actuator a rod (11, 19) running substantially parallel to the arms of the star-shaped fuse element carrier (8) which engages with points on the fuse element or elements (1) which are substantially aligned over the length of the fuse element carrier (8).

19. A fuse according to claim 18, characterised in that the rod is a shearing rod.

20. A fuse according to claim 18 or claim 19, characterised in that the rod is a rotary rod.

21. A fuse according to any one of claims 18 to 20, characterised in that the rod (11) is mounted on or replaces an arm of the star-shaped fuse element carrier (8).

22. A fuse according to any one of claims 18 to 20, characterised in that the rod (11) is mounted between two arms of the star-shaped fuse element carrier (8).

23. A fuse according to any one of claims 18 to 20, characterised in that the rod (11) is mounted on the axis of the star-shaped fuse element carrier (8).

24. A fuse according to any one of claims 20 to 23, characterised by holes or slits (12) in the rotary rod (11) through which the wound fuse element or elements (1) is or are passed.

25. A fuse according to any one of claims 20 to 23, characterised by a longitudinally divided rotary rod which receives the aligned points of the fuse element or elements (1) between its parts.

26. A fuse according to any one of claims 1 to 25, characterised in that the energy storage mechanism is connected to a selective soldered point (6).

27. A fuse according to claim 26, characterised in that the soldered point consists of a eutectic alloy.

28. A fuse according to any one of claims 1 to 25, characterised by a bimetallic or shape-memory element for the thermal triggering.

29. A fuse according to claim 28, characterised in that the bimetallic or shape-memory element effects the actuation travel of the rod.

30. A fuse according to any one or more of claims 1 to 19 and 26 to 29, characterised in that the energy storage mechanism (21) is located in at least one of the contact caps (15, 16) of the fuse.

31. A fuse according to claim 30, characterised by a blocking mechanism (25, 28, 32) in at least one of the contact caps (15, 16) of the fuse.

32. A fuse according to claim 30 or claim 31, characterised by a pull or push rod (19) as actuator.

33. A fuse according to any one of claims 30 to 32, characterised by a cylindrical rod (19).

34. A fuse according to any one of claims 30 to 33, characterised by slits in the rod (19, through which the wound fuse element or elements is or are passed.

35. A fuse according to any one of claims 30 to 34, characterised in that the rod (19) is directed parallel to the longitudinal axis of the fuse.

36. A fuse according to any one of claims 30 to 35, characterised in that the rod (19) os acted on directly or indirectly by the energy storage mechanism.

37. A fuse according to any one of claims 31 to 36, characterised in that the blocking mechanism (23, 28, 32) comprises a lever linkage (24, 25; 28; 32) held in the blocking position (operating position) by a retaining wire (26).

38. A fuse according to claim 37, characterised in that the retaining wire (26) is connected at one end to the triggering (resistance) wire (3) and at its other end to the selective soldering point (6).

39. A fuse according to any one of claims 30 to 38, characterised in that the rod (19) cooperates with the lever linkage (24, 25; 28; 32).

40. A fuse according to any one of claims 37 to 39, characterised in that the retaining wire (26) holds the lever linkage (24, 25; 28; 32) in the operating position counter to the pre-tension of the energy storage mechanism (21).

41. A fuse according to any one of claims 30 to 40, characterised in that the energy storage mechanism (21) comprises at least one compression spring.

42. A fuse according to any one of claims 37 to 41 , characterised in that the lever linkage comprises two levers (24, 25) pivotally mounted at one end, with the free ends operatively connected.

43. A fuse according to claim 42, characterised in that the levers (24, 25) are of unequal length.

44. A fuse according to claim 43, characterised in that the rod (19) engages the longer lever (24) and the retaining wire (26) engages the shorter lever (25).

45. A fuse according to claim 44, characterised in that the rod (19) engages the longer lever (24) nearer to its mounted end than to its free end and the retaining wire (26) engages the free end of the shorter lever (25).

46. A fuse according to any one of claims 32 to 45, characterised in that the rod (19) is acted on by the energy storage mechanism (21) through a pivotally mounted take-up plate (22) at its end not connected to the blocking mechanism.

47. A fuse according to any one of claims 30 to 46, characterised in that the energy storage mechanism (21) and optionally also the take-up plate (22) are accommodated in one of the contact caps (16) and the blocking mechanism (23) in the other contact cap (15).

48. A fuse acording to any one of claims 30 to 46, characterised in that the energy storage mechanism (21) and the blocking mechanism (28, 32) are accommodated in the same contact cap (15).

49. A fuse according to claim 48, characterised in that the blocking mechanism has only a single lever (28) pivotally mounted (29) at its end.

50. A fuse according to claim 49, characterised in that the retaining wire (26) engages the free end of the lever.

51. A fuse according to claim 50, characterised in that the energy storage mechanism (21) engages the lever (28) between the retaining wire (26) and the rod (19) linked to the lever (28).

52. A fuse according to any one of claims 48 to 51, characterised by a take-up plate (32) as lever.

53. A fuse according to any one of claims 31 to 52, characterised in that at least some of the pivotable parts (22, 24, 25, 28, 32) of the blocking mechanism are mounted on the wall of the cap.

54. A fuse according to any one of claims 37 to 53, characterised in that the retaining wire (26) is looped round the end of the lever.

55. A fuse according to claim 54, characterised in that the retaining wire (26) is secured to the lever (25, 28, 32) by means of a part turn or at least one round turn, by means of a bight or by means of an eye.

## Revendications

1. Coupe-circuit, notamment coupe-circuit à fort pouvoir de coupure, comprenant au moins un élément fusible (conducteur fusible) et des moyens pour ouvrir mécaniquement le ou les éléments fusibles à l'aide d'un organe d'actionnement mécanique relié à un accumulateur de force, et comprenant un fil de déclenchement, **caractérisé** par un déclenchement électrique de l'ouverture dans la plage des courants moyens, selon lequel le fil de déclenchement (3) fond par suite de la chute de tension à l'apparition des premiers arcs électriques de fusion à l'intérieur du conducteur fusible (1), et du déplacement ainsi produit du courant sur le fil de déclenchement, et libère ainsi l'accumulateur de force, et par un déclenchement thermique de l'ouverture qui, dans la plage des courants faibles, libère l'accumulateur de force (21) sur la base du dégagement de chaleur produit par les petites surintensités de courant.

2. Coupe-circuit selon la revendication 1, **caractérisé** en ce que, le fil de déclenchement est un fil de résistance (3) monté en parallèle avec le conducteur fusible (1) ou les conducteurs fusibles (1).

3. Coupe-circuit selon la revendication 1 ou 2, **caractérisé** en ce que le fil de résistance est le fil de signalisation (3).

4. Coupe-circuit selon une des revendications 1 à 3, **caractérisé** en ce que chaque conducteur fusible (1) est pourvu de plusieurs pertuis (2, 2a ... 2n), montés électriquement en série.

5. Coupe-circuit selon une des revendications 1 à 4, **caractérisé** en ce que le ou les conducteurs fusibles (1) sont enroulés sur un corps isolant.

6. Coupe-circuit selon la revendication 5, **caractérisé** en ce que le corps isolant est réalisé sous forme de support (8) de conducteurs fusibles en étoile, avec des branches rainurées.

7. Coupe-circuit selon la revendication 6, **caractérisé** par plusieurs conducteurs fusibles (1) enroulés en parallèle, de préférence insérés dans les rainures (9).

8. Coupe-circuit selon une des revendications 1 à 7, **caractérisé** en ce que l'ensemble de la structure de conducteur fusible est incorporé dans du sable siliceux.

9. Coupe-circuit selon une des revendications 4 à 8, **caractérisé** en ce que les pertuis (2, 2a ... 2n) sont des trous.

10. Coupe-circuit selon une des revendications 4 à 8 **caractérisé** en ce que les pertuis (2, 2a ... 2n) sont des entailles.

11. Coupe-circuit selon une des revendications 1 à 10, **caractérisé** en ce que l'ouverture mécanique des conducteurs fusibles (1) s'effectue parallèlement et simultanément en au moins une partie des pertuis (2, 2a ... 2n), montés électriquement en série, de chaque conducteur fusible (1).

12. Coupe-circuit selon une des revendications 1 à 11, **caractérisé** par un fil de retenue (3, 26), qui libère un ressort précontraint (21) afin de déclencher l'organe d'actionnement mécanique (11, 19).

13. Coupe-circuit selon la revendication 12, **caractérisé** en ce que le fil de retenue est le fil de résistance ou de signalisation (3).

14. Coupe-circuit selon la revendication 12 ou 13, **caractérisé** en ce que le fil de retenue (3) est enroulé parallèlement au ou aux conducteurs fusibles (1).

15. Coupe-circuit selon la revendication 12 ou 13, **caractérisé** en ce que le fil de retenue (3) s'étend à travers un canal intérieur dans le support (8) de conducteurs fusibles en étoile.

16. Coupe-circuit selon une des revendications 1 à 15, **caractérisé** en ce que l'accumulateur de force se trouve sur le côté frontal du support (8) de conducteurs fusibles en étoile.

17. Coupe-circuit selon une des revendications 1 à 16, **caractérisé** par un entraînement d'accumulateur de force à ressort.

18. Coupe-circuit selon une des revendications 6 à 17, **caractérisé** par, comme organe d'actionnement, une barre (11, 19) s'étendant sensiblement parallèlement aux branches du support (8) de conducteurs fusibles en étoile, barre qui agit en des points du ou des conducteurs fusibles (1) qui sont sensiblement alignés sur la longueur du support (8) de conducteurs fusibles.

19. Coupe-circuit selon la revendication 18, **caractérisé** en ce que la barre est une barre de cisaillement.

20. Coupe-circuit selon la revendication 18 ou 19, **caractérisé** en ce que la barre est une barre rotative (11).

21. Coupe-circuit selon une des revendications 18 à 20, **caractérisé** en ce que la barre (11) est montée sur une branche du support (8) de conducteurs fusibles en étoile, ou remplace cette branche.

22. Coupe-circuit selon une des revendications 18 à 20, **caractérisé** en ce que la barre (11) est montée entre deux branches du support (8) de conducteurs fusibles en étoile.

23. Coupe-circuit selon une des revendications 18 à 20, **caractérisé** en ce que la barre (11) est montée dans l'axe du support (8) de conducteurs fusibles en étoile.

24. Coupe circuit selon une des revendications 20 à 23, **caractérisé** par des perforations ou des fentes (12) dans la barre rotative (11), à travers lesquelles sont dirigés le ou les conducteurs fusibles (1).

25. Coupe-circuit selon une des revendications 20 à 23, **caractérisé** par une barre rotative longitudinalement divisée, qui reçoit entre ses deux parties les points alignés du ou des conducteurs fusibles (1).

26. Coupe-circuit selon une des revendications 1 à 25, **caractérisé** en ce que l'accumulateur de force est relié à une brasure, sélective (6).

27. Coupe-circuit selon la revendication 26, **caractérisé** en ce que la brasure est constituée d'un alliage eutectique.

28. Coupe-circuit selon une des revendications 1 à 25, **caractérisé** par un bimétal ou un élément à mémoire de forme pour le déclenchement thermique.

29. Coupe-circuit selon la revendication 28, **caractérisé** en ce que le bimétal ou l'élément à mémoire de forme provoque la course de déplacement de la barre.

30. Coupe-circuit selon une ou plusieurs des revendications 1 à 19 et 26 à 29, **caractérisé** en ce que l'accumulateur de force (21) est disposé dans au moins un des capuchons de contact (15, 16) du coupe-circuit.

31. Coupe-circuit selon la revendication 30, **caractérisé** par un mécanisme de blocage (23, 28, 32) dans au moins un des capuchons de contact (15, 16) du coupe-circuit.

32. Coupe-circuit selon la revendication 30 ou 31, **caractérisé** par une barre de traction et/ou de compression (19) comme organe d'actionnement.

33. Coupe-circuit selon une des revendications 30 à 32, **caractérisé** par une barre cylindrique (19).

34. Coupe-circuit selon une des revendications 30 à 33, **caractérisé** par des fentes dans la barre (19), à travers lesquelles sont dirigés le ou les conducteurs fusibles enroulés.

35. Coupe-circuit selon une des revendications 30 à 34, **caractérisé** en ce que la barre (19) est orientée parallèlement à l'axe longitudinal du coupe-circuit.

36. Coupe-circuit selon une des revendications 30 à 35, **caractérisé** en ce que la barre (19) est sollicitée directement ou indirectement par l'accumulateur de force (21).

37. Coupe-circuit selon une des revendications 31 à 36, **caractérisé** en ce que le mécanisme de blocage (23, 28, 32) est constitué d'une tringlerie articulée (24, 25; 28; 32) maintenue en position de blocage (position de service) par un fil de retenue (26).

38. Coupe-circuit selon la revendication 37, **caractérisé** en ce que le fil de retenue (26) est relié par une extrémité au fil de déclenchement (fil de résistance) (3), et par son autre extrémité à la brasure sélective (6).

39. Coupe-circuit selon une des revendications 30 à 38, **caractérisé** en ce que la barre (19) coopère avec la tringlerie articulée (24, 25 ; 28 ; 32).

40. Coupe-circuit selon une des revendications 37 à 39, **caractérisé** en ce que le fil de retenue (26) retient la tringlerie articulée (24, 25; 28; 32) en position de service à l'encontre de la précontrainte de l'accumulateur de force (21).

41. Coupe-circuit selon une des revendications 30 à 40, **caractérisé** en ce que l'accumulateur de force (21) consiste en au moins un ressort de compression.

42. Coupe-circuit selon une des revendications 37 à 41, **caractérisé** en ce que la tringlerie articulée est constituée de deux leviers (24, 25), qui sont montés à pivotement à une extrémité et dont les extrémités libres sont fonctionnellement reliées.

43. Coupe-circuit selon la revendication 42, **caractérisé** en ce que les leviers (24, 25) sont de longueurs différentes

44. Coupe-circuit selon la revendication 43, **caractérisé** en ce que la barre (19) agit sur le levier plus long (24), et le fil de retenue (26) sur le levier plus court (25).

45. Coupe-circuit selon la revendication 44, **caractérisé** en ce que la barre (19) agit sur le levier plus long (24) plus près de l'extrémité de montage que de l'extrémité libre, et le fil de retenue (26) agit sur l'extrémité libre du levier plus court (25).

46. Coupe-circuit selon une des revendications 32 à 45, **caractérisé** en ce que la barre (19) est sollicitée par l'accumulateur de force (21) à son extrémité non reliée au mécanisme de blocage, par l'intermédiaire d'une plaque réceptrice (22) montée à pivotement.

47. Coupe-circuit selon une des revendications 30 à 46, **caractérisé** en ce que l'accumulateur de force (21) et éventuellement la plaque réceptrice (22) sont logés dans un capuchon de contact (16), et le mécanisme de blocage (23) dans l'autre capuchon de contact (15).

48. Coupe-circuit selon une des revendications 30 à 46, **caractérisé** en ce que l'accumulateur de force (21) et le mécanisme de blocage (28, 32) sont logés dans le même capuchon de contact (15).

49. Coupe-circuit selon la revendication 48, **caractérisé** en ce que le mécanisme de blocage ne présente qu'un seul levier (28), monté à pivotement (29) à une extrémité.

50. Coupe-circuit selon la revendication 49, **caractérisé** en ce que le fil de retenue (26) agit à l'extrémité libre du levier.

51. Coupe-circuit selon la revendication 50, **caractérisé** en ce que l'accumulateur de force (21) agit sur le levier (28) entre le fil de retenue (26) et la barre (19) articulée au levier (28).

52. Coupe-circuit selon une des revendications 48 à 51, **caractérisé** par une plaque réceptrice (32) comme levier.

53. Coupe-circuit selon une des revendications 31 à 52, **caractérisé** en ce que les éléments pivotants (22, 24, 25, 28, 32) du mécanisme de blocage sont au moins pour partie montés sur la paroi du capuchon.

54. Coupe-circuit selon une des revendications 37 à 53, **caractérisé** en ce que le fil de retenue (26) s'enroule autour de l'extrémité du levier.

55. Coupe-circuit selon la revendication 54, **caractérisé** en ce que le fil de retenue (26) est fixé sur le levier (25, 28, 32) au moyen d'une boucle partielle ou d'au moins une boucle ronde, au moyen d'une anse ou au moyen d'un oeillet.
